# EUROPEAN PATENT SPECIFICATION

(11) **EP 3 480 170 B1**
(45) Date of publication and mention of the grant of the patent: **01.09.2021**
(21) Application number: 17819216.7
(22) Date of filing: 27.06.2017
(51) Int. Cl.: B01F 3/04, B01F 5/04, C02F 1/24

(54) **MULTI-STAGE AERATION GENERATOR AND WASTEWATER TREATMENT METHOD**
MEHRSTUFIGER BELÜFTUNGSGENERATOR UND ABWASSERBEHANDLUNGSVERFAHREN
GÉNÉRATEUR D'AÉRATION À ÉTAGES MULTIPLES ET PROCÉDÉ DE TRAITEMENT DES EAUX USÉES

(30) Priority: 27.06.2016 CN 201610499009
(43) Date of publication of application: 08.05.2019
(73) Proprietor: Yip, Chee Ching, Hongkong Hong Kong 523562 (CN)
(72) Inventor: Yip, Chee Ching, Hongkong Hong Kong 523562 (CN)
(74) Representative: CMS Cameron McKenna Nabarro Olswang LLP
(86) International application number: PCT/CN2017/090166
(87) International publication number: WO 2018/001219

(56) References cited:
- CN-A- 103 041 723
- CN-A- 106 115 834
- CN-U- 205 740 423
- CN-Y- 2 856 990
- US-A- 4 226 719
- US-A- 4 861 165
- US-A1- 2003 070 992

## Description

### TECHNICAL FIELD

Present invention relates to the field of wastewater treatment, more particularly, relates to a multi-stage aeration generator and a wastewater treatment method.

### BACKGROUND

Dissolved air flotation (DAF) has been broadly applied for wastewater treatment for more than a century. Dissolved air flotation process can produce fine bubbles. Hydrophobic particles leave liquid, wherein adsorbed bubbles are concentrated or waste is filtered, such as molecules, colloids or large particles. Wastes on surface of the bubbles are optionally absorbed, and separation efficiency mostly depends on quantity and volumes of bubbles, and the rest part depends on the difference between their surface activity. The obvious disadvantages of conventional wastewater treatment system are that, first, huge space is occupied by the apparatus, which greatly increases the production and operation cost; second, the apparatus lacks flexibility of production due to self-load parameters (air supply and pump speed) cannot be responded by output (bubble density and flow speed) immediately, it is thereby necessary to provide a multi-stage aeration generator to solve the aforementioned problems.

Document US 2003/0070992 A1 refers to an apparatus and a process for separating impurities from a suspension in a flotation cell, including an aeration device for aerating a liquid with a gas until the liquid is saturated. An expansion device expands the liquid saturated with gas to form gas bubbles in the liquid. An addition device adds the liquid containing gas bubbles to the suspension in the flotation cell.

Document US 4861165 A refers to a plurality of fluent substances that are combined in a distributor and caused to flow in a continuous, pressurized stream through a mixing zone wherein the substances are intimately mixed by turbulent dispersion effected by a series of conically shaped surfaces and alternate restrictions and expansion chambers. While various fluent substances may be advantageously mixed, a typical utility is for effecting a through air binding of ink particles to attain efficient foaming in the deinking of reconstituted printed paper slurry.

### SUMMARY

The present invention is aimed to overcome at least one disadvantage or shortage described in the prior art.

The invention relates to a multi-stage aeration generator, as defined in claims 1 to 4, and to a wastewater treatment method, as defined in claims 5 and 6. The multi-stage aeration generator according to the invention comprises a generator body (also referred to as an air dissolving pump), a pressure monitoring device installed thereon and a Venturi nozzle, and further comprises a capillary tube and a concentric tube, wherein one end of the capillary tube is connected to the Venturi nozzle, and the other end is connected to the concentric tube. Present invention has novel design, and a combination of the Venturi nozzle and the concentric tube, can provide very fine foam continuously and stablely, at the same time it can change output immediately in response to changes of operating parameters input; the multi-stage aeration generator is used to adjust and control air feeding and pump speed to produce appropriate foam density and size for subsequent treatment.

Further, the Venturi nozzle comprises a nozzle body, a nozzle front-end inlet means and a nozzle rear-end outlet means, one end of the nozzle body is connected with the nozzle front-end inlet means and the other end is connected to the nozzle rear-end outlet means. The Venturi nozzle is designed by appropriate geometric surface parameters, and can form water cycles with mass flow, and have spray holes to prevent blockage.

Furthermore, the concentric tube comprises an internal tubular member, a body and an external tubular member, wherein one end of the body is connected with the internal tubular members, and the other end is connected to the external tubular members. Tubular body is prepared by a method in which one tube is radially contracted on the other tube during sintering of the preparation process, so that the article has a radially varying property.

Furthermore, the internal tubular member is also provided with a plurality of concentric layers.

Further, the pressure monitoring device comprises a pressure sensor and a pressure display apparatus, the pressure sensor connected with the pressure display apparatus can sense pressure data formed by fluid in the pressure monitoring device, and can feed it back to pressure display apparatus to remind the operator to pay attention.

Furthermore, the concentric tube is provided with a flow monitoring apparatus.

A further purpose of present invention is to provide a wastewater treatment method, which comprises following steps:
S.1 Subjecting air to enter into a dissolving pump, and mix with wastewater;
S.2 Subjecting mixed wastewater/air to aerate to produce a mixture of microbubbles and wastewater;
S.3 Subjecting the mixed solution to disperse to a flotation cell for filtration and wastewater treatment.

Further, the mixed wastewater/air of the step S2 enters into above multi-stage aeration generator, which can be a combination of one or a series of multiple Venturi nozzles and concentric tubes, the microbubbles produce the mixture of the microbubbles and the wastewater to form white solution, also referred to as a foam, by several aeration extraction and repeated bubble shear.

Further, the white solution formed by the mixture of the microbubbles and wastewater passes through a spraying device which is provided with a valve to be able to eliminate excessive turbulent water flow, before the white solution of the step S3 being dispersed to flotation cell for filtration and wastewater treatment.

Furthermore, a separation chamber is provided in the middle of the spraying device to release undissolved air, and excessive suspended air and undissolved air is discharged from a top vent pipe of the separation chamber to avoid affecting retention quality.

comparing to prior art, the beneficial effect of technical scheme of present invention is that:
(1) The multi-stage aeration generator disclosed in present invention with novel design, and a combination of a Venturi nozzle and a concentric tube, can provide very fine foam continuously and stablely, while making output changes immediately for changes in operating parameters input; the multi-stage aeration generator is used to adjust and control air feeding and pump speed to produce appropriate foam density and size for subsequent treatment.
(2) The multi-stage aeration generator disclosed in present invention, the Venturi nozzle is designed by appropriate geometric surface parameters, and can form water cycles with mass flow, and has spray holes to prevent blockage.
(3) The multi-stage aeration generator disclosed in present invention has a simple structure and convenient maintenance.
(4) The multi-stage aeration generator disclosed in present invention has low production cost and is suitable for mass production.

### BRIEF DESCRIPTION OF THE DRAWING

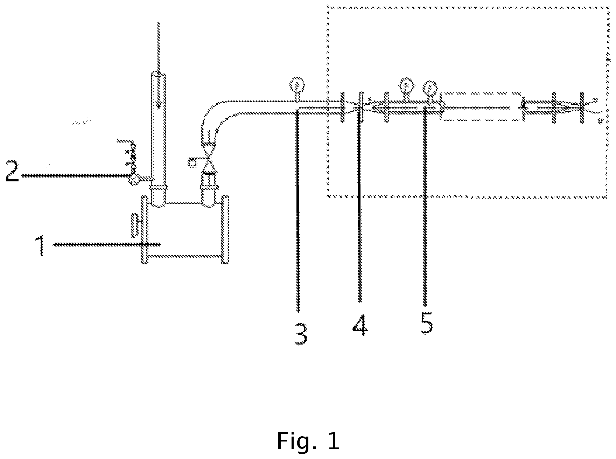

Fig.1 is external structural schematic view of the multi-stage aeration generator in present invention.

In Fig.1, 1 denotes a generator body, 2 denotes a pressure monitoring device, 3 denotes a Venturi nozzle, 4 denotes a capillary conduit, 5 denotes a concentric tube.

### DETAILED DESCRIPTION OF THE EMBODIMENTS

It is necessary to state that terms "installation" and "connection" should be construed broadly, unless explicitly stated and limited, such as, it may be a fixed connection, a removable connection, or an integral connection; it can be a mechanical connection or an electrical connection; it can be directly connected or indirectly connected through an intermediate medium, and it can be an internal connection between two elements. The specific meaning of the aforementioned terms can be understood by those skilled in the art according to specific cases, it will be further described below the technical scheme of present invention with reference to accompanying drawings and embodiments.

As shown in Fig.1, a multi-stage aeration generator, comprises generator body 1, a pressure monitoring device 2 installed thereon and Venturi nozzle 3, and further comprises a capillary tube 4 and a concentric tube 5, wherein one end of the capillary tube is connected to the Venturi nozzle, and the other end is connected to the concentric tube. Present invention has novel design, and a combination of the Venturi nozzle and the concentric tube, can provide very fine foam continuously and stablely, at the same time it can make output changes immediately for changes of operating parameters input; the multi-stage aeration generator is used to adjust and control air feeding and pump speed to produce appropriate foam density and size for subsequent treatment. The Venturi nozzle comprises nozzle body, a nozzle front-end inlet means and a nozzle rear-end outlet means, one end of the nozzle body is connected with the nozzle front-end inlet means and the other end is connected to the nozzle rear-end outlet means. The Venturi nozzle is designed by appropriate geometric surface parameters, and can form water cycles with mass flow, and has spray holes to prevent blockage. The concentric tube comprises an internal tubular member, a body and an external tubular member, wherein one end of the body is connected with the internal tubular members, and the other end is connected to the external tubular members. A tubular body is prepared by a method in which one tube is radially contracted on the other tube during sintering of the preparation process, so that the article has a radially varying property, the internal tubular member is provided with a plurality of concentric layers, the pressure monitoring device comprises a pressure sensor and a pressure display apparatus, wherein the pressure sensor is connected with the pressure display apparatus, which can sense pressure data formed by fluid in the pressure monitoring device, and can feed it back to pressure display apparatus to remind the operator to notice that the flow monitoring apparatus is provided on the concentric tube. This apparatus can provide very fine foam continuously and stably. Wherein the most prominent achievement is that, it can alter output immediately for changes in operating parameters input; and is used to adjust and control air feeding and pump speed to produce appropriate foam density and size for subsequent treatment, when the air and wastewater are mixed along the inner section of the pump and are gasified to saturation, before entering the combination of the Venturi nozzle and the concentric tube, the releasable dissolved gas at a specific liquid pressure forms a "balance of a gas phase and water phase" at this point, according to Henry's law. However, most undissolved air is agitated in the form of relatively large foam mixture to dissolve the air in the liquid, based on the pressure difference between inlet and outlet of the Venturi nozzle. A first small foam is "congealed" from saturated gas to form gas foam according to Henry's Law. At this stage, the small batch of foam is extracted, and mixed with large foam (which is formed by the undissolved air after agitation), to prepare stable and very fine foam.

A wastewater treatment method is provided in present invention, which comprises following steps:
S.1 Subjecting air to enter into a dissolving pump, and mix with wastewater.

A wastewater treatment method of present invention comprises an air dissolving pump, the air is carried directly into wastewater flow by an air inlet manifold of a pump. The mixture of the air and the wastewater is compressed to 10 bar of designed pressure, wherein to ensure the air to fully enter into the dissolved mixed liquid at soluble ratio (according to Henry's Law), adjust and alter gas input volume such that a desired foam size and a concentration of gas foam can be obtained. In general case, when the pump speed is constant, when air intake increases, size of relative foam will also be larger. Likewise, it can be observed that foam size will reduce by turning up the pump speed under the constant inlet speed, however conventional dissolved air flotation system can only play a role of aeration function under a specific air and wastewater pressure setting.

S.2 Subjecting the mixed wastewater/air to enter into the multi-stage aeration generator as described in claims 1-6, to produce a mixture of the microbubbles and the wastewater to form white solution.

The wastewater and air are mixed and transmitted into the aeration generator with a Venturi nozzle coupled to a concentric tube, wherein, sectional area of the concentric tube is close to that of inlets of the Venturi nozzle, and in which case the pressure can be recovered. The outlet of a first Venturi nozzle combined with the concentric tube and a second Venturi nozzle are coupled to an inlet of the concentric tube. A plurality of Venturi nozzles and concentric tubes are constituted as multi-stage aeration generator. Microbubbles are extracted by multiple aerations and repeated bubble shearing, including the following steps:
(1) firstly, the air and wastewater are mixed along the inner section of the pump and are gasified to saturation, before entering the combination of the first Venturi nozzle and the concentric tube, the releasable dissolved gas at a specific liquid pressure forms a "balance of a gas phase and water phase" at this point, according to Henry's law. Most undissolved air is agitated in the form of relatively large foam mixture.
(2) based on the pressure difference between inlet and outlet of the Venturi nozzle. The dissolved air in liquid performs according to Henry's Law, thus a first batch of small foam is "congealed" from saturated gas to form gas foam. At this stage, the small foam is extracted, and mixed with large foam (which is formed by the undissolved air after agitation).
(3) At this time, the total cross sections of the concentric tube are equivalent to "(1)", so the pressure of the liquid is restored. Because the surface tension of the large foam is weaker than that of the microbubbles, large bubbles are broken firstly and the air is firstly dissolved.
(4) the total cross sections of the concentric tube are in equilibrium with "(3)", the internal distance between two solid tube walls during design can give sufficient turbulent shear force to reduce the volume of microbubble foam.
(5) repeats steps "(2)" to "(4)" until "white water flow" is generated.

Comparing to conventional dissolved air flotation, present invention can conveniently remove hydrophobic and hydrophilic pollutant from the waste water, and the costs of equipment startup and operation are reduced by 30% and 40% respectively. In addition, size of the foam typically is reduced from 10-50um to 1-10um, and air solubility is increased from 12% volume / volume to 15-25%, according to Henry's Law, and the temperature of operating liquid can be as high as 45°C.

S.3 Subjecting the white solution to disperse to a flotation cell for filtration and wastewater treatment.

Outlet of the multi-stage aeration generator is transmitted to a spraying device by a tube. Wherein, microbubbles and wastewater liquid are mixed together to form white solution, which is dispersed to a flotation cell for filtration and wastewater treatment. The spraying device is not provided with valve means, which can eliminate excessive turbulent water flow. A separation chamber is provided in the middle of a spraying device to be designed to release undissolved air, and excessive suspended air and undissolved bubble is discharged from a top vent pipe of the separation chamber to avoid affecting retention quality.

The spraying device comprises upper and lower metal disk, which is bolted together with adjustable interspace therebetween, to precisely adjust dispersing flow speed for synchronization with a flotation cell and a desilter design. The design of the spraying device is an engineering design, having two functions as follows:
a. dispenses the "white water flow" to flotation cell evenly.
b. extracts and expels undissolved air from the "white water flow". The two reified purposes are to minimize the accumulation of retention damage formed by air bubble suspending rapidly.

The "white water flow" is discharged from the bottom to the top, and is temporarily retained in the central chamber formed by retaining rings of the upper and lower. The "white water flow" is dispensed slowly to a flotation cell in all aspects. Undissolved air is trapped by interspace in the center of disks , and then overflowed by vent pipes located on the top.

## Claims

1. A multi-stage aeration generator, comprising: an air dissolving pump (1) comprising an air inlet and designed to mix air and wastewater along an inner section of the air dissolving pump (1) so as to saturate the wastewater with air, said air dissolving pump (1) having an adjustable speed and an adjustable air feeding; a pressure monitoring device (2) installed on said air dissolving pump (1), wherein the pressure monitoring device (2) comprises a pressure sensor and a pressure display apparatus connected with said pressure sensor, wherein the pressure sensor can sense the pressure formed by fluid in the pressure monitoring device (2), and can send the resulting pressure data to the pressure display apparatus; a plurality of foaming stages, each foaming stage comprising in sequence a Venturi nozzle (3), a capillary tube (4) and a concentric tube (5), wherein one end of the capillary tube (4) is connected to the Venturi nozzle (3), and the other end is connected to the concentric tube (5), wherein the concentric tube (5) comprises an internal tubular member and an external tubular member, wherein the inlet of the Venturi nozzle (3) of the first foaming stage is in fluid communication with the air dissolving pump (1) so as to receive the mixture of air and wastewater from the air dissolving pump (1), wherein the inlet of the Venturi nozzle (3) of each subsequent foaming stage is connected to the outlet of the concentric tube (5) of the previous foaming stage.

2. The multi-stage aeration generator as claimed in claim 1, said Venturi nozzle (3) comprising nozzle body, nozzle front-end inlet means and nozzle rear-end outlet means, one end of said nozzle body connected with the nozzle front-end inlet means and other end connected to the nozzle rear-end outlet means.

3. The multi-stage aeration generator as claimed in claim 1, wherein said concentric tube further comprises a component connected with the internal tubular member and the external tubular member, wherein one end of said component being connected to the internal tubular member, and the other end being connected to the external tubular member.

4. The multi-stage aeration generator as claimed in claim 1, wherein said concentric tube (5) is provided with a flow monitoring apparatus.

5. A wastewater treatment method that uses a multi-stage aeration generator according to any one of claims 1 to 4, comprising following steps:
S1. Subjecting air to enter into the air dissolving pump (1) of the multi-stage aeration generator, and mixing therein said air with wastewater so as to saturate the wastewater with air;
S2. Subjecting the mixture of wastewater and air obtained in S1 to pass through the plurality of foaming stages of the multi-stage aeration generator, to produce a foam consisting in a mixture of microbubbles with the wastewater.
S3. Subjecting the foam obtained in S2 to disperse to a flotation cell for filtration and wastewater treatment.

6. The wastewater treatment method as claimed in claim 5, wherein a spraying device dispenses the foam formed in step S2 to the flotation cell of step S3, wherein the spraying device is not provided with a valve able to eliminate excessive turbulent water flow.

## Patentansprüche

1. Mehrstufiger Belüftungsgenerator, der Folgendes umfasst: eine Luftlösepumpe (1), die einen Lufteinlass umfasst und so konzipiert ist, dass sie Luft und Abwasser entlang eines inneren Abschnitts der Luftlösepumpe (1) mischt, sodass das Abwasser mit Luft gesättigt wird, wobei die Luftlösepumpe (1) eine einstellbare Drehzahl und eine einstellbare Luftzufuhr aufweist; eine Drucküberwachungsvorrichtung (2), die an der Luftlösepumpe (1) montiert ist, wobei die Drucküberwachungsvorrichtung (2) einen Drucksensor und eine mit dem Drucksensor verbundene Druckanzeigevorrichtung umfasst, wobei der Drucksensor den von Fluid in der Drucküberwachungsvorrichtung (2) erzeugten Druck erfassen kann und die resultierenden Druckdaten zur Druckanzeigevorrichtung senden kann; eine Vielzahl von Schaumbildungsstufen, wobei jede Schaumbildungsstufe in der angegebenen Reihenfolge eine Venturidüse (3), ein Kapillarrohr (4) und ein konzentrisches Rohr (5) umfasst, wobei ein Ende des Kapillarrohrs (4) mit der Venturidüse (3) verbunden ist und das andere Ende mit dem konzentrischen Rohr (5) verbunden ist, wobei das konzentrische Rohr (5) ein inneres rohrförmiges Element und ein äußeres rohrförmiges Element umfasst, wobei der Einlass der Venturidüse (3) der ersten Schaumbildungsstufe sich in Fluidkommunikation mit der Luftlösepumpe (1) befindet, sodass sie das Gemisch aus Luft und Abwasser aus der Luftlösepumpe (1) aufnimmt, wobei der Einlass der Venturidüse (3) einer jeden nachfolgenden Schaumbildungsstufe mit dem Auslass des konzentrischen Rohrs (5) der vorherigen Schaumbildungsstufe verbunden ist.

2. Mehrstufiger Belüftungsgenerator nach Anspruch 1, wobei die Venturidüse (3) einen Düsenkörper, Einlassmittel am vorderen Düsenende und Auslassmittel am hinteren Düsenende umfasst, wobei ein Ende des Düsenkörpers mit den Einlassmitteln am vorderen Düsenende und das andere Ende mit den Auslassmitteln am hinteren Düsenende verbunden ist.

3. Mehrstufiger Belüftungsgenerator nach Anspruch 1, wobei das konzentrische Rohr weiter eine Komponente umfasst, die mit dem inneren rohrförmigen Element und dem äußeren rohrförmigen Element verbunden ist, wobei ein Ende der Komponente mit dem inneren rohrförmigen Element und das andere Ende mit dem äußeren rohrförmigen Element verbunden ist.

4. Mehrstufiger Belüftungsgenerator nach Anspruch 1, wobei das konzentrische Rohr (5) mit einer Durchflussüberwachungseinrichtung ausgestattet ist.

5. Abwasserbehandlungsverfahren, bei dem ein mehrstufiger Belüftungsgenerator nach einem der Ansprüche 1 bis 4 verwendet wird, das die folgenden Schritte umfasst:
S1. Bewirken, dass Luft in die Luftlösepumpe (1) des mehrstufigen Belüftungsgenerators gelangt, und darin das Mischen der Luft mit Abwasser, um das Abwasser mit Luft zu sättigen;
S2. Bewirken, dass das in S1 erhaltene Gemisch aus Abwasser und Luft durch die Vielzahl der Schaumbildungsstufen des mehrstufigen Belüftungsgenerators gelangt, um einen Schaum zu erzeugen, der aus einer Mischung von Mikrobläschen und dem Abwasser besteht.
S3. Bewirken, dass der in S2 erhaltene Schaum zu einer Flotationszelle zur Filtration und Abwasserbehandlung abströmt.

6. Abwasserbehandlungsverfahren nach Anspruch 5, wobei eine Sprühvorrichtung den in Schritt S2 gebildeten Schaum zur Flotationszelle von Schritt S3 überführt, wobei die Sprühvorrichtung nicht mit einem Ventil ausgestattet ist, das zur Beseitigung eines übermäßigen turbulenten Wasserflusses fähig ist.

## Revendications

1. Générateur d'aération à étages multiples, comprenant : une pompe de dissolution d'air (1) comprenant une entrée d'air et conçue pour mélanger de l'air et des eaux usées le long d'une section interne de la pompe de dissolution d'air (1) de façon à saturer les eaux usées d'air, ladite pompe de dissolution d'air (1) présentant une vitesse réglable et une alimentation en air réglable ; un dispositif de surveillance de pression (2) installé sur ladite pompe de dissolution d'air (1), dans lequel le dispositif de surveillance de pression (2) comprend un détecteur de pression et un appareil d'affichage de pression connecté audit détecteur de pression, dans lequel le détecteur de pression peut détecter la pression formée par le fluide dans le dispositif de surveillance de pression (2), et peut envoyer les données de pression obtenues à l'appareil d'affichage de pression ; une pluralité d'étages de moussage, chaque étage de moussage comprenant successivement une buse Venturi (3), un tube capillaire (4) et un tube concentrique (5), dans lequel une extrémité du tube capillaire (4) est connectée à la buse Venturi (3), et l'autre extrémité est connectée au tube concentrique (5), dans lequel le tube concentrique (5) comprend un élément tubulaire interne et un élément tubulaire externe, dans lequel l'entrée de la buse Venturi (3) du premier étage de moussage est en communication fluidique avec la pompe de dissolution d'air (1) de façon à recevoir le mélange d'air et d'eaux usées de la pompe de dissolution d'air (1), dans lequel l'entrée de la buse Venturi (3) de chaque étage de moussage ultérieur est connecté à la sortie du tube concentrique (5) de l'étage de moussage précédent.

2. Générateur d'aération à étages multiples selon la revendication 1, ladite buse Venturi (3) comprenant un corps de buse, des moyens d'entrée d'extrémité avant de buse et des moyens de sortie d'extrémité arrière de buse, une extrémité dudit corps de buse connectée aux moyens d'entrée d'extrémité avant de buse et l'autre extrémité connectée aux moyens de sortie d'extrémité arrière de buse.

3. Générateur d'aération à étages multiples selon la revendication 1, dans lequel ledit tube concentrique comprend en outre un composant connecté à l'élément tubulaire interne et à l'élément tubulaire externe, dans lequel une extrémité dudit composant est connectée à l'élément tubulaire interne, et l'autre extrémité est connectée à l'élément tubulaire externe.

4. Générateur d'aération à étages multiples selon la revendication 1, dans lequel ledit tube concentrique (5) est pourvu d'un appareil de surveillance de débit.

5. Procédé de traitement des eaux usées qui utilise un générateur d'aération à étages multiples selon l'une quelconque des revendications 1 à 4, comprenant les étapes suivantes :
S1. Forçage de la pénétration d'air dans la pompe de dissolution d'air (1) du générateur d'aération à étages multiples, et mélange dans celui-ci dudit air avec des eaux usées de façon à saturer les eaux usées d'air ;
S2. Forçage du passage du mélange d'eaux usées et d'air obtenu en S1 à travers la pluralité d'étages de moussage du générateur d'aération à étages multiples, pour produire une mousse consistant en un mélange de microbulles et des eaux usées.
S3. Forçage de la dispersion de la mousse obtenue en S2 jusqu'à une cellule de flottation pour filtration et traitement des eaux usées.

6. Procédé de traitement des eaux usées selon la revendication 5, dans lequel un dispositif de pulvérisation distribue la mousse formée à l'étape S2 à la cellule de flottation de l'étape S3, dans lequel le dispositif de pulvérisation n'est pas pourvu d'une valve permettant d'éliminer l'écoulement d'eau turbulent excessif.
